# EUROPÄISCHE PATENTSCHRIFT

(11) **EP 2 619 464 B1**
(45) Veröffentlichungstag und Bekanntmachung des Hinweises auf die Patenterteilung: **20.04.2016**
(21) Anmeldenummer: 11749429.4
(22) Anmeldetag: 31.08.2011
(51) Int. Cl.: F16B 19/00

(54) **SPANNSTIFT**
SPRING PIN
GOUPILLE RESSORT

(30) Priorität: 24.09.2010 DE 102010041340
(43) Veröffentlichungstag der Anmeldung: 31.07.2013
(73) Patentinhaber: Robert Bosch GmbH, 70442 Stuttgart (DE)
(72) Erfinder: SANTAMARIA, Angelo, 71394 Kernen (DE); DUTT, Andreas, 70469 Stuttgart (DE); ALEKER, Jochen, 70499 Stuttgart (DE)
(86) Internationale Anmeldenummer: PCT/EP2011/065013
(87) Internationale Veröffentlichungsnummer: WO 2012/038216

(56) Entgegenhaltungen:
- DE-A1- 2 505 878
- DE-C1- 19 927 856
- US-A- 1 810 749
- US-A- 3 442 170
- US-A- 3 630 261

## Beschreibung

### Stand der Technik

Die Erfindung geht aus von einem Spannstift gemäß dem Oberbegriff des Anspruchs 1.

Ein solcher Spannstift ist durch die DE 25 05.878 A1 bekannt. Dieser Spannstift ist zum Einpressen in eine hohlzylinderförmige Aufnahme vorgesehen. Der Spannstift ist hülsenförmig ausgebildet und weist in seinem Umfang einen durchgehenden Schlitz auf, durch den der Spannstift in radialer Richtung elastisch verformbar ist. Die radiale Elastizität des Spannstifts ist über dessen Längserstreckung variabel und nimmt in Einpressrichtung des Spannstifts zu, indem die in Umfangsrichtung des Spannstifts gesehene Breite des Schlitzes in Einpressrichtung des Spannstifts zunimmt. Hierdurch wird vermieden, dass sich der außerhalb der Aufnahme angeordnete Teil der Spannhülse aufweitet.

Durch die US 1 810 749 A ist ebenfalls ein Spannstift bekannt, der einen durchgehenden Schlitz aufweist. Zusätzlich sind an den axialen Enden des Spannstifts in Umfangsrichtung zum durchgehenden Schlitz versetzte weitere kurze Schlitze in Form von Nuten vorgesehen, die zum Ansetzen eines Werkzeugs dienen und die die radiale Elastizität des Spannstifts nicht beeinflussen.

Ein Spannstift wird beispielsweise auch bei einer Kraftstoffhochdruckpumpe verwendet, bei der dieser in eine Aufnahme einer Antriebswelle eingepresst wird. Die Kraftstoffhochdruckpumpe weist ein oder mehrere Pumpenelemente mit jeweils einem Pumpenkolben auf, der durch die Antriebswelle in einer Hubbewegung angetrieben wird. Beim Anbau der Kraftstoffhochdruckpumpe an einer Brennkraftmaschine wird die Antriebswelle mit einem Antrieb der Brennkraftmaschine verbunden, beispielsweise einer Welle der Brennkraftmaschine. Hierbei ist es erforderlich, dass sich der Pumpenkolben in einer definierten Stellung bezüglich des Antriebs der Brennkraftmaschine befindet, damit die Kraftstoffförderung der Kraftstoffhochdruckpumpe synchron zu der erforderlichen Kraftstoffeinspritzung an der Brennkraftmaschine erfolgt. Durch den Spannstift wird dabei eine Drehstellung der Antriebswelle markiert, in der sich der Pumpenkolben beispielsweise in seinem oberen Totpunkt befindet. Die Antriebswelle wird über eine Kupplungsvorrichtung mit dem Antrieb der Brennkraftmaschine verbunden, wobei sich der Spannstift nahe der Kupplungsvorrichtung befindet und dessen aus der Aufnahme herausragender Teil in Kontakt mit der Kupplungsvorrichtung gelangen kann, was zu Geräuschen und Beschädigungen führen kann.

### Vorteile der Erfindung

Der erfindungsgemäße Spahnstift mit den Merkmalen gemäß Anspruch 1 hat demgegenüber den Vorteil, dass die Verformung des aus der Aufnahme ragenden Teils des Spannstifts durch geeignete Anzahl, Anordnung und Ausbildung des wenigstens einen weiteren Schlitzes so gering gehalten werden kann, dass ein Kontakt des aus der Aufnahme ragenden Teils des Spannstifts mit benachbarten Bauteilen sicher vermieden werden kann.

In den abhängigen Ansprüchen sind vorteilhafte Ausgestaltungen und Weiterbildungen des erfindungsgemäßen Spannstifts angebeben.

### Zeichnung

Ein Ausführungsbeispiel der Erfindung ist in der Zeichnung dargestellt und in der nachfolgenden Beschreibung näher erläutert. Es zeigen Figur 1 eine Kraftstoffhochdruckpumpe in vereinfachter Darstellung in einem Längsschnitt, Figur 2 einen Spannstift der Kraftstoffhochdruckpumpe in einer Seitenansicht gemäß einer nicht erfindungsgemäßen Ausführungsform, Figur 3 den Spannstift gemäß einer weiteren nicht erfindungsgemäßen Ausführungsform und Figur 4 den Spannstift gemäß einem Ausführungsbeispiel der Erfindung.

### [Fortsetzung auf Seite 3 der ursprünglichen Beschreibung]

### Beschreibung des Ausführungsbeispiels

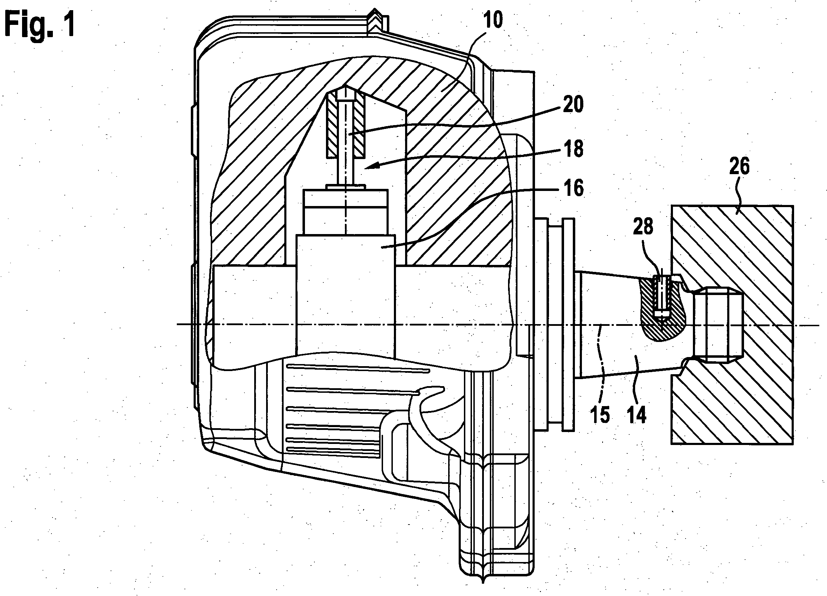

In Figur 1 ist eine Kraftstoffhochdruckpumpe für eine Kraftstoffeinspritzeinrichtung einer Brennkraftmaschine ist. Die Pumpe weist ein Gehäuse 10 auf, in dem eine rotierend angetriebene Antriebswelle 14 um eine Drehachse 15 drehbar gelagert ist. Die Antriebswelle 14 weist wenigstens einen Nocken 16 auf, der auch ein Mehrfachnocken sein kann. Die Pumpe weist wenigstens ein oder mehrere Pumpenelemente 18 mit jeweils einem Pumpenkolben 20 auf, der durch den Nocken 16 der Antriebswelle 14 zumindest mittelbar in einer Hubbewegung in zumindest annähernd radialer Richtung zur Drehachse 15 der Antriebswelle 14 angetrieben wird. Der Antriebswelle 14 ragt aus dem Gehäuse 10 heraus und diese ist über eine Kupplungsvorrichtung 26 mit einem Antrieb der Brennkraftmaschine verbindbar. Der Antrieb kann eine Welle der Brennkraftmaschine sein, beispielsweise deren Nockenwelle, Kurbelwelle oder eine Ausgleichswelle sein. Insbesondere wenn die Kraftstoffhochdruckpumpe nur ein oder zwei Pumpenelemente 18 aufweist ist es erforderlich, dass die Kraftstoffförderung der Pumpenelemente 18 synchron zur Kraftstoffeinspritzung an der Brennkraftmaschine erfolgt. Aus diesem Grund ist es erforderlich, dass die Antriebswelle 14 und die Welle der Brennkraftmaschine in einer exakt definierten Winkellage zueinander über die Kupplungsvorrichtung 26 miteinander verbunden sind. Um die Stellung des Pumpenkolbens 20 zu markieren ist in eine Aufnahme 28 der Antriebswelle 14 in deren aus dem Gehäuse 10 ragendem Endbereich ein Spannstift 30 eingepresst. Wenn sich der Spannstift 30 in einer bestimmten Drehlage befindet, beispielsweise senkrecht nach oben verläuft, so befindet sich der Pumpenkolben 20 in einer bestimmten Hubstellung, beispielsweise in seinem oberen Totpunkt.

Der Spannstift 30 ragt mit seinem Ende aus der Aufnahme 28 heraus, die beispielsweise eine Bohrung in Antriebswelle 14 ist. Die Kupplungsvorrichtung 26 verläuft nahe dem Spannstift 30, so dass diese mit dem Spannstift 30 in Kontakt kommen kann, wenn dessen aus der Aufnahme 28 ragendes Ende zu stark verformt ist.

Der Spannstift 30 ist wie ein üblicher normgemäßer Spannstift aus Federstahl hergestellt, hülsenförmig und radial elastisch verformbar ausgebildet und in die Aufnahme 28 in Pfeilrichtung 32 eingepresst. Der Spannstift 30 ist jedoch nicht über seine gesamte Längserstreckung L in die Aufnahme 28 eingepresst sondern nur über eine Teillänge x und der der entgegen der Einpressrichtung 32 weisende Endbereich des Spannstifts 30 ragt aus der Aufnahme 28 heraus. Es ist vorgesehen, dass die radiale Elastizität des Spannstifts 30 über dessen Längserstreckung L nicht konstant sondern variabel ist. Insbesondere ist vorgesehen, dass die radiale Elastizität des Spannstifts 30 in dessen in der Aufnahme 28 angeordnetem Bereich der Längserstreckung x geringer ist als in dessen außerhalb der Aufnahme 28 angeordnetem Endbereich.

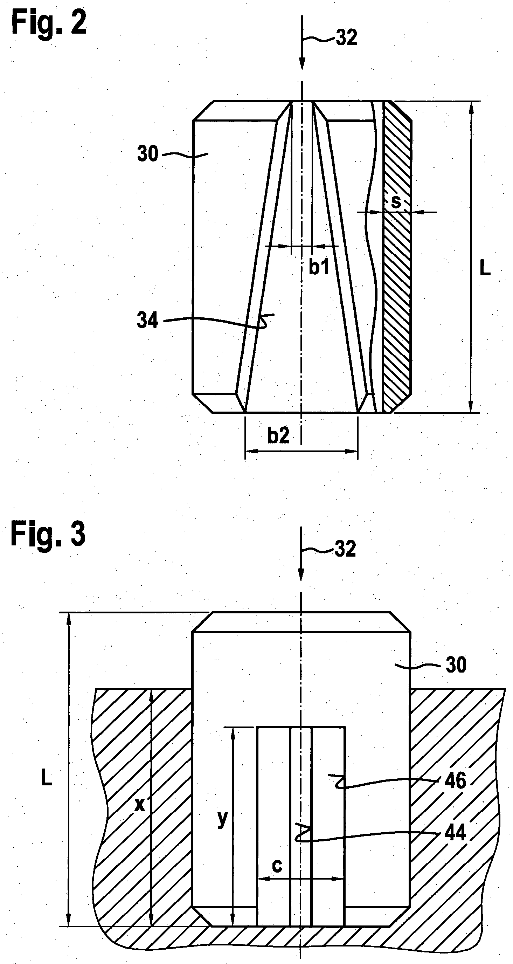

In Figur 2 ist der Spannstift 30 gemäß einer ersten nicht erfindungsgemäßen Ausführungsform dargestellt. Der Spannstift 30 ist hülsenförmig ausgebildet und weist in seinem Umfang einen über die gesamte Längserstreckung L des Spannstifts 30 durchgehenden Schlitz 34 auf. Der Schlitz 34 ist so ausgebildet, dass in Umfangsrichtung des Spannstifts 30 betrachtet die Breite b des Schlitzes 34 in Einpressrichtung 32 zunimmt, der Schlitz 34 also breiter wird ausgehend von einer Breite b1 am entgegen Einpressrichtung 32 weisenden Ende zu einer Breite b2 am in Einpressrichtung 32 weisenden Ende. Hierdurch wird erreicht, dass die radiale Elastizität des Spannstifts 30 in dessen in Einpressrichtung 32 weisendem Endbereich am größten ist und zu dessen entgegen Einpressrichtung 32 weisendem Endbereich am geringsten ist. Der Spannstift 30 lässt sich somit in seinem in Einpressrichtung 32 weisenden, in der Aufnahme 28 angeordnetem Bereich der Längserstreckung x radial leichter zusammendrücken als in dessen entgegen Einspressrichtung 32 weisendem Endbereich. Beim Einpressen des Spannstifts 30 in die Aufnahme 28 wird der in der Aufnahme 28 liegende Bereich x des Spannstifts 30 elastisch zusammengedrückt, während sich der außerhalb der Aufnahme 28 verbleibende Endbereich des Spannstifts 30 nicht oder nur wenig aufspreizt.

In Figur 3 ist der Spannstift 30 gemäß einer zweiten nicht erfindungsgemäßen Ausfürungs form dargestellt. Der Spannstift 30 weist dabei einen über dessen gesamte Längserstreckung L durchgehenden Schlitz 44 auf, der in Umfangsrichtung gesehen eine etwa konstante Breite b aufweist. Zusätzlich zum durchgehenden Schlitz 44 weist der Spannstift 30 in Umfangsrichtung zum Schlitz 44 versetzt wenigstens einen weiteren Schlitz 46 auf, der sich jedoch nur über einen Teil der Längserstreckung L des Spannstifts 30 erstreckt. Es kann vorgesehen sein, dass nur ein weiterer Schlitz 46 vorhanden ist, der dann vorzugsweise dem Schlitz 44 diametral am Umfang des Spannstifts 30 gegenüberliegt. Alternativ kann auch vorgesehen sein, dass zwei oder mehr weitere Schlitze 46 vorhanden sind, die dann vorzugsweise gleichmäßig über den Umfang des Spannstifts 30 verteilt angeordnet sind. Der wenigstens eine weitere Schlitz 46 verläuft ausgehend von dem in Einpressrichtung 32 weisenden Ende des Spannstifts 30 über eine Erstreckung y. Beispielsweise ist die Längserstreckung y des wenigstens einen weiteren Schlitzes 46 des Spannstifts 30 kleiner oder zumindest annähernd gleich der Längserstreckung x des Spannstifts 30, die in der Aufnahme 28 angeordnet ist. Der wenigstens eine weitere Schlitz 46, weist eine etwa konstante Breite c über seine Längserstreckung y auf und der Schlitz 46 ist etwa rechteckförmig ausgebildet. Das Ende des wenigstens einen weiteren Schlitzes 46 kann anstelle eines rechteckigen Verlaufs auch gerundet ausgebildet sein.

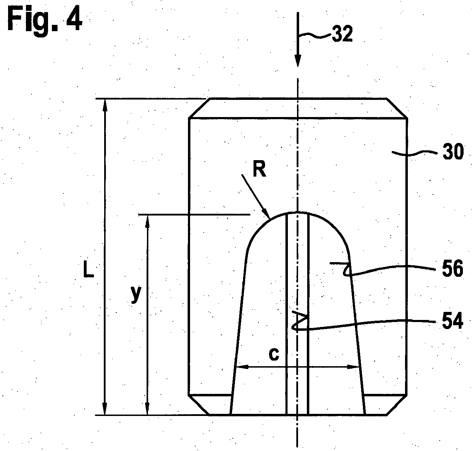

In Figur 4 ist der Spannstift 30 gemäß einem der Erfindung Ausführungsbeispiel dargestellt, bei dem wie beider zweiten Ausführungsform zusätzlich zum durchgehenden Schlitz 54 mit etwa konstanter Breite b in Umfangsrichtung zu diesem versetzt wenigstens ein weiterer Schlitz 56 vorgesehen ist. Der wenigstens eine weitere Schlitz 46 verläuft ausgehend von dem in Einpressrichtung 32 weisenden Ende des Spannstifts 30 über eine Erstreckung y. Beispielsweise ist die Längserstreckung y des wenigstens einen weiteren Schlitzes 56 des Spannstifts 30 kleiner oder zumindest annähernd gleich der Längserstreckung x des Spannstifts 30, die in der Aufnahme 28 angeordnet ist. Die Breite c des wenigstens einen weiteren Schlitzes 56 nimmt ausgehend vom in Einpressrichtung 32 des Stifts 30 weisenden Ende des Spannstifts 30 entgegen der Einpressrichtung 32 ab, so dass der Schlitz 56 schmäler wird. Der wenigstens eine weitere der Schlitz 56 ist etwa dreieckförmig ausgebildet. Das Ende des wenigstens einen weiteren Schlitzes 56 ist gerundet ausgebildet mit einem Radius R. Wie beider zweiten Ausführungsform kann nur ein weiterer Schlitz 56 vorgesehen sein, der vorzugsweise zumindest annähernd diametral dem Schlitz 54 gegenüberliegend angeordnet ist oder es können mehrere weitere Schlitze 56 vorgesehen sein, die vorzugsweise zumindest annähernd gleichmäßig über den Umfang des Spannstifts 30 verteilt angeordnet sind.

Alternativ oder zusätzlich zu den vorstehend erläuterten Ausbildungen kann vorgesehen sein, dass die Wandstärke s des Spannstifts 30 über dessen Längserstreckung L variabel ist. Insbesondere nimmt die Wandstärke s des Spannstifts 30 in Einpressrichtung 32 ab, wodurch die Zunahme der radialen Elastizität des Spannstifts 30 in Einpressrichtung 32 erreicht wird.

## Patentansprüche

1. Spannstift zum Einpressen in eine hohlzylinderförmige Aufnahme (28), wobei der Spannstift (30) hülsenförmig ausgebildet ist und in seinem Umfang wenigstens einen in Längsrichtung des Spannstifts (30) durchgehenden Schlitz (44;54) aufweist, durch den der Spannstift (30) in radialer Richtung elastisch verformbar ist, wobei die radiale Elastizität des Spannstifts (30) über dessen Längserstreckung (L) variabel ist und in Einpressrichtung (32) des Spannstifts (30) zunimmt, **dadurch gekennzeichnet, dass** der Spannstift (30) zusätzlich zu dem durchgehenden Schlitz (44;54) in Umfangsrichtung zu diesem versetzt wenigstens einen weiteren Schlitz (46;56) aufweist, der sich nur über einen Teil (y) der Längserstreckung (L) des Spannstifts (30) erstreckt, und dass die in Umfangsrichtung des Spannstifts (30) gesehene Breite (c) des wenigstens einen weiteren Schlitzes (46;56) in Einpressrichtung (32) des Spannstifts (30) zunimmt.

2. Spannstift nach Anspruch 1, **dadurch gekennzeichnet, dass** der wenigstens eine weitere Schlitz (46;56) am Umfang des Spannstifts (30) dem durchgehenden Schlitz (44;54) zumindest annähernd diametral gegenüberliegend oder dass mehrere weitere Schlitze (46;56) zumindest annähernd gleichmäßig über den Umfang des Spannstifts (30) verteilt angeordnet sind.

3. Spannstift nach Anspruch 1 oder 2, **dadurch gekennzeichnet, dass** der wenigstens eine weitere Schlitz (46;56) ausgehend von dem in Einpressrichtung (32) weisenden Ende des Spannstifts (30) verläuft.

4. Spannstift nach einem der Ansprüche 1 bis 3, **dadurch gekennzeichnet, dass** der Endbereich des wenigstens einen weiteren Schlitzes (46) gerundet (R) ausgebildet ist.

5. Spannstift nach einem der vorstehenden Ansprüche, **dadurch gekennzeichnet, dass** die Wandstärke (s) des Spannstifts (30) in Einpressrichtung (32) abnimmt.

6. Kraftstoffhochdruckpumpe für eine Kraftstoffeinspritzeinrichtung einer Brennkraftmaschine mit einem Gehäuse (10), in dem wenigstens ein Pumpenelement (18) angeordnet ist, das einen durch eine Antriebswelle (14) in einer Hubbewegung angetriebenen Pumpenkolben (20) aufweist, wobei die Antriebswelle (14) außerhalb des Gehäuses (10) über eine Kupplungsvorrichtung (26) mit einem Antrieb der Brennkraftmaschine verbindbar ist, **dadurch gekennzeichnet, dass** in einem außerhalb des Gehäuses (10) liegenden Bereich der Antriebswelle (14) in eine Aunnahme (28) ein Spannstift (30) eingepresst ist um eine definierte Hubstellung des Pumpenkolbens (20) zu markieren und dass der Spannstift (30) nach einem der vorstehenden Ansprüche ausgebildet ist.

## Claims

1. Dowel pin for pressing into a hollow cylindrical receptacle (28), wherein the dowel pin (30) is of sleeve-shaped form and, in its circumference, has at least one slot (44; 54) which is continuous in a longitudinal direction of the dowel pin (30) and by way of which the dowel pin (30) is elastically deformable in a radial direction, wherein the radial elasticity of the dowel pin (30) is variable over the longitudinal extent (L) of said dowel pin and increases in the pressing-in direction (32) of the dowel pin (30), **characterized in that** the dowel pin (30) has, in addition to the continuous slot (44; 54), at least one further slot (46; 56) which is offset in a circumferential direction with respect to said continuous slot and which extends only over a part (y) of the longitudinal extent (L) of the dowel pin (30), and **in that** the width (c), as viewed in the circumferential direction of the dowel pin (30), of the at least one further slot (46; 56) increases in the pressing-in direction (32) of the dowel pin (30).

2. Dowel pin according to Claim 1, **characterized in that** the at least one further slot (46; 56) is arranged on the circumference of the dowel pin (30) so as to be situated at least approximately diametrically opposite the continuous slot (44; 54), or **in that** multiple further slots (46; 56) are arranged so as to be distributed at least approximately uniformly over the circumference of the dowel pin (30).

3. Dowel pin according to Claim 1 or 2, **characterized in that** the at least one further slot (46; 56) runs proceeding from that end of the dowel pin (30) which points in the pressing-in direction (32).

4. Dowel pin according to one of Claims 1 to 3, **characterized in that** the end region of the at least one further slot (46) is of rounded (R) form.

5. Dowel pin according to one of the preceding claims, **characterized in that** the wall thickness (s) of the dowel pin (30) decreases in the pressing-in direction (32).

6. High-pressure fuel pump for a fuel injection device of an internal combustion engine, having a housing (10) in which there is arranged at least one pump element (18) which has a pump piston (20) which is driven in a reciprocating movement by way of a drive shaft (14), wherein, outside the housing (10), the drive shaft (14) is connectable by way of a coupling device (26) to a drive of the internal combustion engine, **characterized in that**, in a region of the drive shaft (14) situated outside the housing (10), a dowel pin (30) is pressed into a receptacle (28) in order to mark a defined stroke position of the pump piston (20), and **in that** the dowel pin (30) is designed according to one of the preceding claims.

## Revendications

1. Goupille ressort destinée à être enfoncée dans un logement cylindrique creux (28), la goupille ressort (30) étant réalisée en forme de douille et présentant, dans sa périphérie, au moins une fente (44 ; 54) continue dans la direction longitudinale de la goupille ressort (30), par laquelle la goupille ressort (30) peut être déformée élastiquement dans la direction radiale, l'élasticité radiale de la goupille ressort (30) étant variable sur son étendue longitudinale (L) et augmentant dans la direction d'enfoncement (32) de la goupille ressort (30), **caractérisée en ce que** la goupille ressort (30) présente en plus de la fente continue (44 ; 54), de manière décalée dans la direction périphérique par rapport à celle-ci, au moins une fente supplémentaire (46 ; 56) qui ne s'étend que sur une partie (y) de l'étendue longitudinale (L) de la goupille ressort (30), et **en ce que** la largeur (c), vue dans la direction périphérique de la goupille ressort (30), de l'au moins une fente supplémentaire (46 ; 56), augmente dans la direction d'enfoncement (32) de la goupille ressort (30).

2. Goupille ressort selon la revendication 1, **caractérisée en ce que** l'au moins une fente supplémentaire (46 ; 56) est disposée au niveau de la périphérie de la goupille ressort (30) au moins approximativement de manière diamétralement opposée à la fente continue (44 ; 54) ou **en ce que** plusieurs fentes supplémentaires (46 ; 56) sont disposées de manière répartie au moins approximativement uniformément sur la périphérie de la goupille ressort (30).

3. Goupille ressort selon la revendication 1 ou 2, **caractérisée en ce que** l'au moins une fente supplémentaire (46 ; 56) s'étend à partir de l'extrémité de la goupille ressort (30) tournée dans la direction d'enfoncement (32).

4. Goupille ressort selon l'une quelconque des revendications 1 à 3, **caractérisée en ce que** la région d'extrémité de l'au moins une fente supplémentaire (46) est réalisée sous forme arrondie (R).

5. Goupille ressort selon l'une quelconque des revendications précédentes, **caractérisée en ce que** l'épaisseur de paroi (s) de la goupille ressort (30) diminue dans la direction d'enfoncement (32).

6. Pompe à carburant haute pression pour un dispositif d'injection de carburant d'un moteur à combustion interne comprenant un boîtier (10), dans lequel est disposé au moins un élément de pompe (18) qui présente un piston de pompe (20) entraîné par un arbre d'entraînement (14) dans un mouvement de course, l'arbre d'entraînement (14) pouvant être connecté à l'extérieur du boîtier (10) par le biais d'un dispositif d'accouplement (26) à un entraînement du moteur à combustion interne, **caractérisée en ce que** dans une région de l'arbre d'entraînement (14) située à l'extérieur du boîtier (10), une goupille ressort (30) est enfoncée dans un logement (28) afin de marquer une position de course définie du piston de pompe (20) et **en ce que** la goupille ressort (30) est réalisée selon l'une quelconque des revendications précédentes.
